# EUROPEAN PATENT APPLICATION

(11) **EP 1 519 097 A2**
(43) Date of publication of application: **30.03.2005**
(21) Application number: 04077619.7
(22) Date of filing: 21.09.2004
(51) Int. Cl.: F16L 37/14

(54) **Pipe coupling**

(30) Priority: 29.09.2003 JP 2003338336
(71) Applicant: Aisin Seiki Kabushiki Kaisha, Kariya-shi, Aichi-ken 448-8650 (JP)
(72) Inventor: Nakamura, Toshiyuki, Kariya Aichi 448-8605 (JP); Hattori, Yasuaki, 2-chome Kariya-shi Aichi-ken 448-8650 (JP)
(74) Representative: Marshall, John Grahame

(57) **Abstract**

A pipe coupling includes a cylindrical coupling body (1) made of resin, an O-ring (3) provided between an inner surface (1B) of the coupling body and an outer surface of a pipe end (7) inserted into the coupling body, and a pipe supporting means (4,5,6) between the coupling body and the pipe end (7) for supporting and retaining the O-ring (3) and the pipe end (7) in the coupling body. Plural through-windows (1a) are formed through the outer cylindrical wall of the coupling body (1) at a predetermined distance from an opening end portion (1 D). An elastic retention member (2) passes through the through-windows (1a) and through outer grooves (5c,6c) in the pipe supporting means (4,5,6). The pipe supporting means (4,5,6) is made of reinforced resin. At least one inner annular groove (5h,6h) is formed at an inner surface of the pipe supporting means (4,5,6) for engaging with an annular outer projecting portion (7a) formed at the outer surface of the pipe end (7).

## Description

### Field of the Invention

This invention relates to a pipe coupling for connecting to motor vehicle pipe work, particularly to high pressure pipe work such as that of a clutch oil pressure system or a brake oil pressure system.

### Background

Conventionally, a coupling for connection to a vehicle oil pressure system uses a transverse clip of an elastic material which retains the pipe in position and maintains the oil seal and can be fitted rapidly without the use of bolts.

JP-A2-2001-074185 discloses a pipe coupling including a cylindrical coupling body, an O-ring seal provided between an inner surface of the coupling body and an outer surface of a pipe inserted into the coupling body, and an elastic supporting member inserted into the coupling body and attached to an outer surface of the pipe for supporting the O-ring seal and the pipe in the coupling body. The elastic supporting deforms in order to retain the pipe in the coupling body.

JP-A2-1996-08844 discloses a pipe coupling which is joined to a high pressure pipe by inserting the pipe axially into a hole provided at a connecting portion via an O-ring and a back up ring and by inserting a transverse approximately U-shaped metallic spring clip into windows provided cordially through the wall of the connector, to engage behind a portion of the pipe of larger external diameter.

However, in the pipe coupling disclosed in JP-A2-2001-074185, the supporting member is made of elastic material and supports the coupling body and the pipe by elastic deformation. The supporting member generally lacks the rigidity necessary for a pipe coupling suitable for a high-pressure generating clutch or a brake oil pressure system. When high pressure is generated, the elastic supporting member may deform so much that it is impossible to maintain firm sealing, which may significantly decrease oil pressure transmission efficiency.

The pipe coupling disclosed in JP-A2-1996-08844 is structured so that the pipe is inserted axially into the hole of the connecting portion along with the O-ring and the back up ring, and resistance to decoupling under high pressure conditions is provided by the metallic spring. In this structure, noise may be generated by contact between the metallic pipe and the metallic spring. In addition, to obtain a good fit and a high resistance to decoupling under high pressure conditions, a high precision assembly is required between the legs of the spring element and the larger external diameter portion of the pipe.

A need thus exists for a pipe connector which establishes a good seal at high pressure conditions, and does not generate noise caused by vibration of a vehicle engine or similar.

### Summary of the Invention

The invention provides a pipe coupling having the features of claim 1.

The pipe coupling can be utilised in high pressure hydraulic systems because the reinforced resin material of the supporting member is stronger than the elastic resin of JP-A2-2001-074185. In addition, because the coupling body and the metallic pipe can be engaged in both the axial direction and the rotational direction by the reinforced resin supporting member, noise generated by the vibration and by contact between metallic components is prevented.

The pipe coupling can be assembled easily even when the parts to be assembled cannot be seen by assembly workers, and can be assembled even in constricted spaces because of the following assembly procedure. First, the annular sealing member is inserted into the coupling body followed by a first supporting member of the supporting means which may if desired be temporarily retained in place by inserting the retention means into the through-window or windows of the coupling body. Thus, a sub-assembly part is completed.

Separately, a second supporting member of the supporting means is assembled around the pipe end, to form a second sub-assembly.

Finally, the second sub-assembly is inserted into the coupling body and retained in position by the retention means.

Because the angular orientation of the at least one window in the coupling body can be arbitrarily set, the direction of insertion of the retention means can be freely selected. The retention means preferably engages with a pair of the outer grooves cutting cordally across the outer wall of the cylindrical portion of the second supporting member of the supporting means. Such a pair of outer grooves forms a mutually parallel pair, located at diametrically opposite side of the cylindrical portion of the second supporting member.

### Brief Description of the Drawings

Figure 1 shows a partial axial section through a clutch master cylinder including a pipe connector according to an embodiment of the present invention.
Figure 2 is a vertical section in the plane II-II of Figure 1.
Figure 3 shows a disassembled perspective view of the main parts of the pipe connector of Figure 1.

### Detailed Description

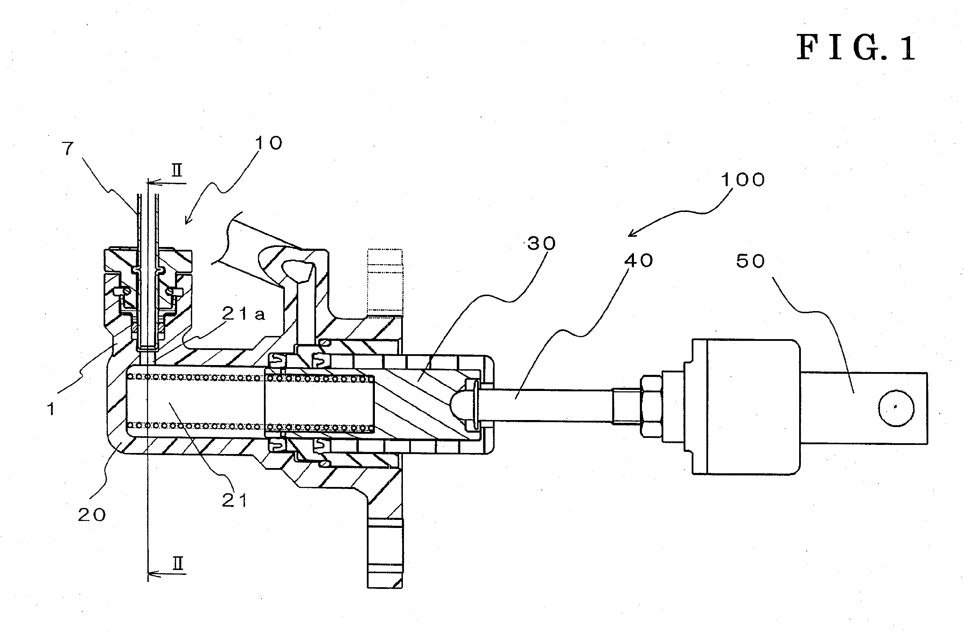

Figure 1 shows a clutch master cylinder 100 incorporating a pipe connector 10 according to the invention. The clutch master cylinder includes a resin housing 20 defining a pressure chamber 21. The material of the clutch master cylinder 100 may be, for example, a reinforced resin such as glass fibre reinforced nylon resin or an aramide fibre-reinforced resin. A piston 30 is axially slidable in the pressure chamber 21 under the action of a push rod 40 which is connected in use to a clutch pedal (not shown) through a link portion 50. A coupling body 1 of the pipe connector 10 is formed as an integral part of the housing 20. An interior of the coupling body 1 is connected to the pressure chamber 21 via a connecting hole 21 a. When the piston 30 moves in the actuating direction under the control of the clutch pedal, hydraulic fluid in the pressure chamber 21 flows into a pipe 7 through the connecting hole 21a, and thence to a clutch release cylinder (not shown) for engaging and disengaging the clutch.

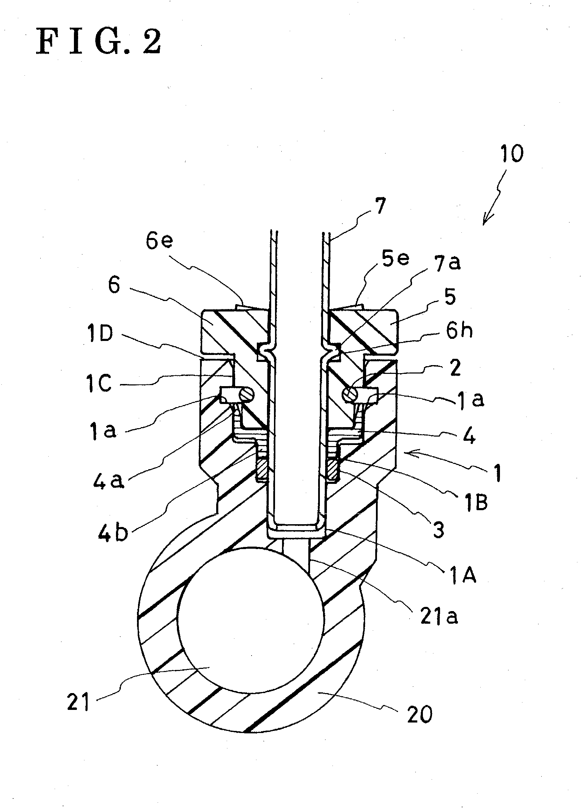

Figure 2 shows the construction of the pipe coupling 10 in more detail. A coupling body 1 is made of reinforced resin as a unit with the housing 20. The inside of the coupling body 1 and the pressure chamber 21 are connected via the connecting hole 21 a. The main components of the pipe coupling 10 are an O-ring 3, a first supporting member 4 and a second supporting member 5,6 which is fabricated as two mutually engageable interconnecting parts 5 and 6. The second supporting member 5,6 and the coupling body 1 are mutually fastened together with a U-shaped clip 2 which is inserted into through-windows 1 a of the coupling body 1. The pipe coupling 10 is easily engaged and disengaged, as described below.

The inner surface of the coupling body 1 includes an inner cylindrical surface 1 a, an inner cylindrical surface 1b, and an inner cylindrical surface 1 c, the cylindrical surfaces being coaxial with progressively increasing inner diameters. The inner diameter of the surface 1a is approximately equal to an outer diameter of the pipe 7. The inner diameter of the inner surface 1 B is larger by an amount sufficient to receive the O-ring 3. The inner diameter of the inner surface 1C is formed to be approximately equal to an outer diameter of the second supporting member 5,6. Two mutually parallel through-windows 1 a are formed through an outer wall of the coupling body 1 at a predetermined distance from an opening end portion 1 d.

The first supporting member 4 is made of glass fibre reinforced nylon resin and includes a boss 4b which in use surrounds the pipe end portion 7. An inner surface of the boss 4b is approximately equal to the outer diameter of the pipe 7. An outer diameter of the boss 4b is approximately equal to an inner diameter of the inner surface 1 B of the coupling body 1. The O-ring 3 is deformed by hydraulic pressure against an end surface of the boss 4b, which provides a reaction surface for the deformation of the O-ring 3 for ensuring a seal between the O-ring 3 and the inner surface 1 B of the coupling body 1 and between the O-ring 3 and the pipe 7. Two diametrically opposite projecting portions 4a are formed on the first supporting member 4 and contact the inner surface 1C of the coupling body. On sub-assembly, the O-ring 3 is retained in the coupling body 1 by utilising the restoring force induced by a deformation of the projecting portions 4a. By structuring the coupling body 1 as mentioned above, the coupling body 1 can be sub-assembled from small parts even in a confined space without problem. In addition, in this structure as illustrated, the O-ring 3 is inserted from above, which assists assembly.

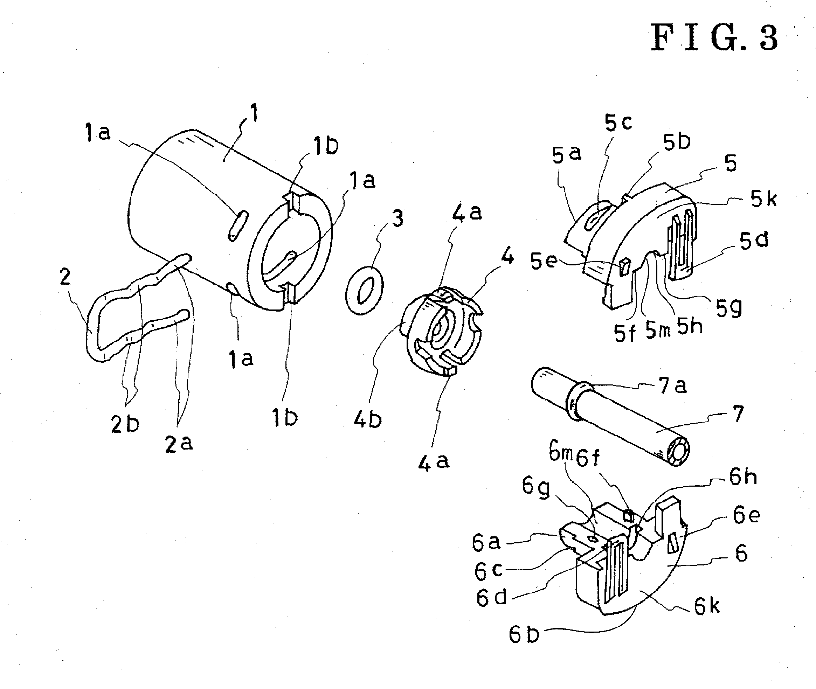

Figure 3 is a disassembled perspective view of the main parts of the pipe coupling 10. The second supporting member 5,6, made of glass fibre reinforced nylon resin, is formed in two parts 5 and 6 which are assembled around the pipe end 7. The assembled second supporting member 5,6 has two differently sized outer surfaces, one (circular portion 5a,6a) having an outer diameter approximately equal to an inner diameter of the projecting portions 4a of the first supporting member 4, and the other (unreferenced) having an outer diameter substantial equal to the inner diameter of the inner surface 1 C of the coupling body. Outer grooves 5c,6c for engaging with the U-shape clip 2 are formed cordally across the circular portion 5a,6a and are mutually parallel when the component halves of the second supporting member 5,6 are assembled together. Guiding bars 5f,6f and guiding holes 5g,6g serve as inter-engaging positioning members when the component halves 5 and 6 of the second supporting member 5,6 are assembled together. Hook portions 5d,6d engage as a snap fit over projecting portions 5e,6e to hold the component halves 5 and 6 around the pipe end 7 when they are assembled together. When the second supporting member 5,6 is assembled around the pipe end 7, an annular outwardly projecting portion of the pipe end 7, formed by swaging, is received in an annular groove 5h,6h in the internal cylindrical surface of the assembled second supporting member 5,6. The width of the annular groove 5h,6h is sufficient to prevent detachment of the pipe end 7 from the coupling 10 caused by high pressures and external forces, and to minimise movement of the pipe in the axial direction.

The U-shaped clip 2 is made of formed spring metal and comprises two legs 2b with mutually divergent end portions 2a. The two legs 2b spring resiliently together to a mutual separation less than the mutual separation between the through-windows 1a formed in the coupling body. A mid portion of each of the two legs 2b is formed curved, with approximately the same curvature as the curvature of the outer periphery of the outer grooves 5c,6c, to retain the U-shaped spring clip in position in use.

Assembly of the pipe coupling 10 is as follows. First, O-ring 3 is pushed into the inside of the inner surface 1 B of the coupling body 1. Next, the first supporting member 4 is similarly pushed into the coupling body 1, past the through-windows 1a. The O-ring 3 and the first supporting member 4 are not easily detached because the projecting portions 4a of the first supporting member are resiliently deformed and flex outwardly against the cylindrical wall 1 C of the coupling body 1, preferably engaging the through-windows 1 a. If desired, the sub-assembly of coupling body 1, O-ring 3 and first supporting member 4 can be held positively together by temporarily inserting the U-shaped clip 2 through the windows 1a, where it serves positively to retain the first supporting member 4 and O-ring 3 until final assembly of the pipe 7.

Meanwhile, the second supporting member halves 5 and 6 are assembled together around the pipe end 7, with the outer projecting portion 7a accommodated in the annular inner groove 5h,6h, to form a second sub-assembly.

Next, the U-shaped clip 2, if temporarily inserted through the through-windows 1 a, is removed and the pipe end 7 and second supporting member 5,6 are inserted into the coupling body 1 until the outer grooves 5c,6c are in register with the through-windows 1 a; and finally the U-shaped clip 2 is inserted through the windows 1a and the outer grooves 5c,6c. Thus, the assembly of the pipe coupling 10 is completed.

On assembly, the resilience of the U-shaped clip 2 as retention element keeps the two legs 2b of the clip 2 securely in the outer grooves 5c,6c. Two angular positioning projections 5b,6b are located in recesses 1b in the coupling body 1 to establish a proper predetermined angular orientation between the coupling body 1 and the second supporting member 5,6.

In the above described embodiment, the retention means has been described as a metallic U-shaped clip 2. However the material of the retention means is not limited to formed metal, and the retention means may have any suitable shape or be made of any suitable, preferably elastic, material.

In addition, in the described embodiment, the supporting means is formed of two parts, namely the first supporting member 4 and the second supporting member 5,6. However, the supporting means may be formed or assembled as a single unit.

In the described embodiment, reinforced nylon resin was used as the material of the supporting means. However, any other resin material with a high pressure durability and mechanical strength may be employed.

The pipe coupling of the invention is a simply structured pipe coupling with improved reliability against unintentional detachment. In addition, forming the supporting means from resin material prevents noise that would be generated by contact between metallic components if the supporting means had been made of metal.

The pipe coupling can be utilised in high pressure hydraulic systems because the supporting means of the pipe connector is made of a reinforced resin material which is stronger than an elastic resin. In addition, the coupling body and the pipe end can be engaged both in the axial direction and in the rotational direction.

The pipe coupling can be assembled easily, by touch in situations where the assembled parts cannot be seen by assembly workers; and it can be assembled even in a restricted space following the assembly procedure described above.

## Claims

1. A pipe coupling comprising
a cylindrical coupling body (1) made of resin for receiving a pipe end (7);
a sealing member (3) for providing a high pressure oil seal between the coupling body (1) and a pipe end (7) received therein;
supporting means (4,5,6) for surrounding the pipe end (70) and supporting it within the coupling body (1) when the pipe end (7) and supporting means (4,5,6) are received in the coupling body; and
retention means (2) for retaining the pipe end (7) and supporting means (4,.5,6) in the coupling body (1) by insertion through at least one window (1 a) passing laterally through a wall of the coupling body (1) and engagement with the supporting means (4,5,6);
**CHARACTERISED IN THAT**
the supporting means (4,5,6) is made of a reinforced resin;
the supporting means (4,5,6) comprises a cylindrical portion (5a,6a) for closely surrounding the pipe end (7), having an outer diameter for close engagement with the inner surface of the cylindrical coupling body (1);
at least one outer groove (5c,6c) is formed in an outer wall of the cylindrical portion (5a,6a) of the supporting means (4,5,6) at a position to register with the at least one window (1 a) in the wall of the coupling body (1);
at least one annular inner groove (5h,6h) is formed in an inner wall of the cylindrical portion (5a,6a) of the supporting means (4,5,6) for engagement with an annular outer projecting portion (7a) of the pipe end (7); and
the retention means (2) pass through the at least one window (1 a) in the wall of the coupling body (1) and through the at least one outer groove (5c,6c) in the outer wall of the cylindrical portion 5a,6a) of the supporting means (4,5,6) to retain the pipe end (7) in the coupling body (1).

2. A pipe coupling according to Claim 1, wherein
the supporting means (4,5,6) includes a first supporting member (4) and a second supporting member (5,6);
the first supporting member (4) has an approximately annular shape;
an end surface of the first supporting member (4) supports the sealing member (3) at an inner periphery of the coupling body (1);
the second supporting member (5,6) supports the outer surface of the pipe end (7);
the cylindrical portion of the supporting means (4,5,6) in which the annular inner groove (5h,6h) is formed is a cylindrical portion of the second supporting member (5,6); and
the at least one outer groove in the outer-wall of the cylindrical portion (5a,6a) of the supporting means (4,5,6) through which the retention means (2) passes to retain the pipe end (7) in the coupling body (1) is the cylindrical portion of the second supporting member (5,6).

3. A pipe coupling according to Claim 2, wherein
a first positioning means (5b,6b) is formed in or on the second supporting member (5,6);
a second positioning means (1b) is formed in or on the coupling body (1); and
the first positioning means (5b,6b) and the second positioning means (1b) position the coupling body (1) at a predetermined angle relative to the second supporting member (5,6), preventing the coupling body (1) from rotating around the axis of the pipe end (7).

4. A pipe coupling according to Claim 2 or Claim 3, wherein
the at least one outer groove (5c,6c) in the second supporting member (5,6) comprise a pair of generally parallel and diametrically opposed grooves (5c,6c) extending transversely across opposite sides of the outer surface of the second supporting member (5,6).

5. A pipe connector according to any of Claims 2 to 4, wherein
at least one projecting portion (4a) is formed on the first supporting member (4), resiliently deformable to engage with an inner surface of the cylindrical coupling body (1) when the first supporting member (4) is received within the cylindrical coupling body (1).

6. A pipe connector according to Claim 5, wherein
the or each projecting portion (4a) engages resiliently with an inner surface of the cylindrical coupling body (1) in the vicinity of the or each window (1a) in the wall of the coupling body (1) when the pipe connector is assembled.

7. A pipe connector according to any of Claims 2 to 5, wherein
the second supporting member (5,6) comprises a pair of generally semicylindrical moulded halves (5 and 6) which together fit around and provide support for the pipe end (7).

8. A pipe connector according to Claim 7, wherein
the pair of moulded halves (5 and 6) further includes mutual positioning means (5f,5g,6f,6g) for establishing the positioning of the moulded halves one relative to the other, and mutual engaging means (5d,5e,6d,6e) for securing the moulded halves (5 and 6) one to the other around the pipe end (7).

9. A pipe connector according to any preceding claim, wherein
the or each outer groove (5c,6c) in the outer wall of the cylindrical wall (5a,6a) of the supporting means (4,5,6) is curved along its length, and the retention means (2) comprises at least one correspondingly curved portion (2a) which is fitted into a corresponding one of the one or more outer grooves (5a,6a) when the retention means (2) retains the pipe end (7) in the coupling body (1).

10. A pipe connector according to any preceding claim, wherein
there are two windows (1a) at diametrically opposed locations in the wall of the coupling body (1);
there are two outer grooves (5c,6c) at diametrically opposed locations in the outer wall of the cylindrical portion (5a,6a) of the supporting means (4,5,6);
the retention means (2) comprises an approximately U-shaped spring slip (2) having two legs (2b), with mutually divergent end portions (2a), each leg (2b) being shaped to pass through a respective window (1 a) in the wall of the coupling body (1) with a flexure apart of the legs (2b), for engagement with respective outer grooves (5c,6c) in the outer wall of the cylindrical portion (5a,6a) of the supporting means (4,5,6) to retain the pipe end (7) in the coupling body (1).
